# EUROPÄISCHE PATENTANMELDUNG

(11) **EP 4 234 207 A1**
(43) Veröffentlichungstag der Anmeldung: **30.08.2023**
(21) Anmeldenummer: 22158674.6
(22) Anmeldetag: 24.02.2022
(51) Int. Cl.: B29C 48/694, B29C 48/50, B29C 48/27, B29C 45/24

(54) **FILTEREINHEIT FÜR EINE EXTRUDER-ANLAGE, FILTERANORDNUNG UND ZUGEHÖRIGE SIEBWECHSELVORRICHTUNG SOWIE VERFAHREN ZUM HERSTELLEN EINER DERARTIGEN FILTEREINHEIT**

(71) Anmelder: Coperion GmbH, 70469 Stuttgart (DE)
(72) Erfinder: Huber, Stefan, 71229 Leonberg (DE); Tratnik, Tomi, 71254 Ditzingen (DE); Schmudde, Markus, 71711 Steinheim a.d. Murr (DE); Koberg, Carsten, 71332 Waiblingen (DE); Kühn, Ralf, 74391 Erligheim (DE); Graupe, Manuel, 70192 Stuttgart (DE)
(74) Vertreter: Ege Lee & Roider Patentanwälte

(57) **Zusammenfassung**

Filtereinheit (100) für eine Extruder-Anlage, umfassend einen Stützkörper (102) mit einem hohlzylinderförmigen Wandabschnitt (104) und einem damit verbundenen Bodenabschnitt (106), wobei der Stützkörper (102) eine Mittellängsachse (108) aufweist und einen Innenraum (110) begrenzt, wobei der hohlzylinderförmige Wandabschnitt (104) mehrere in den Innenraum (110) mündende Durchgangsöffnungen (112) aufweist und gegenüberliegend zu dem Bodenabschnitt (106) eine Austrittsöffnung (114) für eine Kunststoffschmelze ausbildet; und ein Verdrängerelement (116) zum Verdrängen der, insbesondere über die Durchgangsöffnungen (112), in den Innenraum (110) eingetretenen Kunststoffschmelze im Wesentlichen in Richtung der Mittellängsachse (108), wobei das Verdrängerelement (116) und der Stützkörper (102) einteilig ausgebildet und/oder hergestellt sind, sowie Filteranordnung (200) mit mehreren derartigen Filtereinheiten (100), Siebwechselvorrichtung mit zumindest zwei Filteranordnungen (200 und Verfahren zum Herstellen einer derartigen Filtereinheit (100).

## Beschreibung

Die Erfindung betrifft eine Filtereinheit für eine Extruder-Anlage. Außerdem betrifft die Erfindung eine Filteranordnung und eine zugehörige Siebwechselvorrichtung für eine Extruder-Anlage. Ferner betrifft die Erfindung ein Verfahren zum Herstellen einer derartigen Filtereinheit.

Üblicherweise wird eine Kunststoffschmelze, insbesondere im Polyolefinbereich, nach dem Verfahrensteil bzw. Extrudieren, durch einen Siebwechsler geleitet, um Fremdpartikel im Vorfeld einer Granulierung herauszufiltern. In dem Siebwechsler kommen Filteranordnungen mit einer Siebelementhalteplatte und mehreren Stützkörben mit Filterelementen zum Einsatz.

Beispielsweise ist aus dem Dokument DE 2 119 545 eine Filtereinrichtung für Extruder bekannt, die längliche Siebe und eine senkrecht zur Strömungsrichtung der Kunststoffschmelze angeordnete, mit Bohrungen versehene Halteplatte für die Siebe aufweist. Die Siebe weisen die Form eines an einem Ende offenen Hohlzylinders auf und bestehen aus einem äußeren Stützkorb aus Draht, der an seinem offenen Ende einen Bund für die Halterung in der Halteplatte besitzt, und aus einem inneren Siebkorb aus Filtergewebe, der seinerseits mit einem Bund für die Halterung im Stützkorb versehen ist.

Die bekannten Stützkorbe haben jedoch den Nachteil, dass sie einerseits einen hohen Druckverlust und andererseits eine geringe Stabilität bzw. keine hinreichende Festigkeit im Betrieb aufweisen. Insbesondere beim Verfahren oder Austauschen der Stützkörbe werden diese aufgrund der geringen Wandstärken stark biegebelastet. Dadurch kann es zu Verbiegungen oder sogar zum Bruch des Stützkorbs kommen. Ferner verursachen die bekannten Filtereinheiten einen erheblichen Druckabfall bzw. Differenzdruck der Kunststoffschmelze, wodurch der Durchsatz der Kunststoffschmelze durch die Filteranordnung begrenzt ist. Auch können sich Ablagerungen an der Innenseite der Stützkörbe bilden, die die Strömung der Kunststoffschmelze negativ beeinflusst. Ferner ist die Reinigung aktueller Stützkörbe, beispielsweise mittels Pyrolyse, sehr aufwändig und birgt das Risiko, dass sich die separaten Bauteile verziehen oder sogar im späteren Betrieb lösen können.

Der Erfindung liegt die Aufgabe zugrunde, eine eingangs genannte Filtereinheit strukturell und/oder funktionell zu verbessern. Außerdem liegt der Erfindung die Aufgabe zugrunde, eine eingangs genannte Filteranordnung sowie eine zugehörige Siebwechselvorrichtung strukturell und/oder funktionell zu verbessern. Ferner liegt der Erfindung die Aufgabe zugrunde, ein eingangs genanntes Verfahren zum Herstellen einer derartigen Filtereinheit funktionell zu verbessern.

Es ist insbesondere eine Aufgabe der vorliegenden Erfindung, eine Filtereinheit, Filteranordnung sowie Siebwechselvorrichtung bereitzustellen, welche die im Zusammenhang mit dem Stand der Technik aufgezeigten Probleme reduzieren bzw. beseitigen kann.

Die Aufgabe wird gelöst mit einer Filtereinheit mit den Merkmalen des Anspruchs 1. Außerdem wird die Aufgabe gelöst mit einer Filteranordnung mit den Merkmalen des Anspruchs 11 sowie mit einer Siebwechselvorrichtung mit den Merkmalen des Anspruchs 12. Ferner wird die Aufgabe gelöst mit einem Verfahren mit den Merkmalen des Anspruchs 13. Vorteilhafte Ausführungen und/oder Weiterbildungen sind Gegenstand der Unteransprüche.

Eine Filtereinheit kann für eine Extruder-Anlage und/oder Filteranordnung und/oder Siebwechselvorrichtung sein bzw. ausgebildet sein. Die Filtereinheit kann zum Filtern einer Kunststoffschmelze ausgebildet und/oder bestimmt sein.

Die Filtereinheit kann einen Stützkörper aufweisen. Der Stützkörper kann einen hohlzylinderförmigen Wandabschnitt aufweisen, der Stützkörper kann einen Bodenabschnitt aufweisen. Der Bodenabschnitt kann mit dem Wandabschnitt verbunden sein. Der Stützkörper kann eine Mittellängsachse aufweisen und/oder definieren. Die Mittellängsachse kann eine Symmetrieachse, insbesondere des Stützkörpers, sein. Die Mittellängsachse kann sich in Längsrichtung des Stützkörpers erstrecken. Der Stützkörper kann rotationssymmetrisch, insbesondere um seine Mittellängsachse, sein. Der Stützkörper kann einen Innenraum begrenzen. Der Wandabschnitt und/oder der Bodenabschnitt kann den Innenraum begrenzen. Der hohlzylinderförmige Wandabschnitt kann mehrere in den Innenraum mündende Durchgangsöffnungen aufweisen. Die Durchgangsöffnungen können in radialer Richtung relativ zur Mittellängsachse verlaufen. Die Durchgangsöffnungen können gleichmäßig über den Umfang des Stützkörpers bzw. dessen Wandabschnitts verteilt sein. Die in den Innenraum mündenden Durchgangsöffnungen des Wandabschnitts können alle den gleichen Durchmesser aufweisen. Der Durchmesser der Durchgangsöffnungen kann zwischen 2 und 5 mm, insbesondere zwischen 3 und 4 mm, beispielsweise 3,5 mm betragen. Die Durchgangsöffnungen des Wandabschnitts können unterschiedliche Durchmesser aufweisen. Der Wandabschnitt kann, insbesondere gegenüberliegend zu dem Bodenabschnitt, eine Austrittsöffnung für die Kunststoffschmelze ausbilden. Der Bodenabschnitt kann an der stromaufwärtigen Seite des Stützkörpers angeordnet sein. Die Austrittsöffnung kann an der stromabwärtigen Seite des Stützkörpers angeordnet sein. Der Stützkörper kann als an einem Ende offener Hohlzylinder ausgebildet sein. Der Wandabschnitt und der Bodenabschnitt können einteilig und/oder einstückig, d.h., aus einem Stück oder aus einem Teil, ausgebildet und/oder hergestellt sein oder werden.

Die Filtereinheit kann ein Verdrängerelement zum Verdrängen der, insbesondere über die Durchgangsöffnungen, in den Innenraum eingetretenen Kunststoffschmelze, insbesondere im Wesentlichen in Richtung der Mittellängsachse, aufweisen. Das Verdrängerelement kann ein Verdrängerkörper bzw. Verdrängungskörper sein. Das Verdrängerelement kann ein Verdrängerabschnitt bzw. Verdrängungsabschnitt sein. Das Verdrängerelement und der Stützkörper können einteilig und/oder einstückig, d.h., aus einem Stück oder aus einem Teil, ausgebildet und/oder hergestellt sein oder werden.

Das Verdrängerelement kann im Innenraum und/oder am Bodenabschnitt angeordnet bzw. ausgebildet sein oder werden. Das Verdrängerelement und der Bodenabschnitt können einteilig und/oder einstückig, d.h., aus einem Stück oder aus einem Teil, ausgebildet und/oder hergestellt sein oder werden. Das Verdrängerelement kann an der stromaufwärtigen Seite des Stützkörpers angeordnet sein. Das Verdrängerelement kann an der dem Innenraum zugewandten Seite des Bodenabschnitts angeordnet sein oder werden. Das Verdrängerelement kann sich vom Bodenabschnitt in den Innenraum erstrecken. Das Verdrängerelement kann eine Grundfläche aufweisen. Die Grundfläche kann der Bodenabschnitt sein und/oder durch den Bodenabschnitt definiert sein. Das Verdrängerelement kann konzentrisch zur Mittellängsachse angeordnet bzw. ausgebildet sein oder werden. Das Verdrängerelement kann sich vom Bodenabschnitt in Richtung zum Innenraum und/oder zur Mittellängsachse hin verjüngen.

Das Verdrängerelement kann zumindest abschnittsweise im Wesentlichen kegelförmig und/oder konusförmig ausgebildet sein. Das Verdrängerelement kann zumindest abschnittsweise im Wesentlichen teilkonusförmig ausgebildet sein. Das Verdrängerelement kann zumindest abschnittsweise im Wesentlichen kugelförmig oder teilkugelförmig ausgebildet sein. Die Grundfläche des Verdrängerelements kann durch den Bodenabschnitt gebildet und/oder definiert sein. Das Verdrängerelement kann im Wesentlichen als Kegel, Konus oder Kegelstumpf ausgebildet sein. Das Verdrängerelement kann im Wesentlichen als Halbkugel ausgebildet sein.

Das Verdrängerelement kann eine Fläche und/oder Kontur, wie Mantelfläche und/oder Mantelkontur, aufweisen. Die Fläche und/oder Kontur kann einen oder mehrere Flächenabschnitte und/oder Konturabschnitte, wie Mantelflächenabschnitte und/oder Mantelkonturabschnitte, aufweisen. Der eine oder die mehreren Flächenabschnitte bzw. Konturabschnitte kann/können sich in Richtung zur Mittellängsachse hin, beispielsweise konisch, verjüngen. Der eine oder die mehreren Flächenabschnitte bzw. Konturabschnitte kann/können in Richtung zur Mittellängsachse hin unter einem Winkel schräg und/oder relativ zur Mittellängsachse verlaufen und/oder ausgerichtet sein. Der Winkel kann ein Konuswinkel oder halber Konuswinkel sein. Die Fläche und/oder Kontur bzw. der eine oder die mehreren Flächenabschnitte bzw. Konturabschnitte kann/können konzentrisch zur Mittellängsachse ausgebildet sein oder werden. Die Fläche und/oder Kontur bzw. der eine oder die mehreren Flächenabschnitte bzw. Konturabschnitte kann/können mehrere Durchmesser aufweisen bzw. definieren, die insbesondere in axialer Richtung, d.h., in Richtung der Mittellängsachse, abnehmen. Die mehreren Flächenabschnitte bzw. Konturabschnitte können in unterschiedlichen Winkeln schräg und/oder relativ zur Mittellängsachse verlaufen und/oder ausgerichtet sein. Der Winkel eines radial außenliegenden Flächenabschnitts bzw. Konturabschnitts kann größer sein als der Winkel eines radial innenliegenden Flächenabschnitts bzw. Konturabschnitts. Die Winkel der mehreren Flächenabschnitte bzw. Konturabschnitte können in axialer Richtung, d.h., in Richtung der Mittellängsachse, abnehmen. Durch Variation der Winkel kann eine gewünschte Beeinflussung der Kunststoffströmung bzw. des Fließverhaltens der Kunststoffschmelze und/oder der rheologischen Verhältnisse herbeigeführt werden. Der oder die Winkel kann/können relativ zur Mittellängsachse zwischen etwa 30° und 90°, insbesondere zwischen etwa 50° und 88°, beispielsweise etwa 50,7°, 63° oder 87°, betragen.

Der Stützkörper und das Verdrängerelement können aus einem im Wesentlichen nicht schweißbaren Stahl, beispielsweise legierten, wie hochlegierten, Stahl, wie Warmarbeitsstahl, hergestellt sein oder werden. Der Stahl kann ein Stahl hoher Festigkeit und/oder hoher Zähigkeit und/oder hoher Warmfestigkeit sein. Beispielsweise kann der Stahl ein Werkstoff 1.23xx sein.

Die Durchgangsöffnungen können Durchgangsbohrungen sein. Der Stützkörper und/oder dessen hohlzylinderförmiger Wandabschnitt kann eine aktive Filterfläche aufweisen bzw. definieren. Die aktive Filterfläche kann die Gesamtfläche aller Durchgangsöffnungen bzw. aller Querschnittsflächen der Durchgangsöffnungen sein. Die aktive Filterfläche kann die Multiplikation der Anzahl von Durchgangsöffnungen mit der Querschnittsfläche einer Durchgangsöffnungen sein. Die Durchgangsöffnungen können alle die gleiche Bohrungsquerschnittsfläche aufweisen. Der Stützkörper und/oder dessen hohlzylinderförmiger Wandabschnitt kann eine, insbesondere äußere, Mantelfläche aufweisen bzw. definieren. Die Durchgangsöffnungen können über die Mantelfläche verteilt sein, beispielsweise in mehreren Reihen um die Mantelfläche herum. Die Durchgangsöffnungen können über die Mantelfläche gleichmäßig verteilt angeordnet sein. Die Mantelfläche kann durch den Durchmesser, insbesondere Außendurchmesser, des Stützkörpers und/oder dessen hohlzylinderförmigen Wandabschnitts definiert sein. Die Mantelfläche kann durch die Länge, insbesondere in Richtung der Mittellängsachse, des Stützkörpers und/oder dessen hohlzylinderförmigen Wandabschnitts definiert sein. Das Verhältnis der aktiven Filterfläche zu der Mantelfläche des Stützkörpers, insbesondere des Wandabschnitts des Stützkörpers, kann etwa 0,15 bis 0,65, insbesondere etwa 0,25 bis 0,5, bevorzugt etwa 0,38, betragen.

Der Stützkörper und/oder dessen hohlzylinderförmiger Wandabschnitt kann eine Wanddicke bzw. Wandstärke, beispielsweise in radialer Richtung gemessen, aufweisen bzw. definieren. Die Wanddicke kann beispielsweise etwa 2 mm bis 4 mm, bevorzugt etwa 3 mm oder 3,5 mm, betragen. Das Verhältnis des Durchmessers, insbesondere Außendurchmessers, des Stützkörpers und/oder dessen hohlzylinderförmigen Wandabschnitts im Quadrat zur Länge, insbesondere in Richtung der Mittellängsachse, des Stützkörpers und/oder dessen hohlzylinderförmigen Wandabschnitts kann etwa 5 bis 20, insbesondere etwa 10 bis 16, beispielsweise etwa 10,7 oder 15,5 betragen. Der Durchmesser, insbesondere Außendurchmesser, des Stützkörpers und/oder dessen hohlzylinderförmigen Wandabschnitts kann zwischen etwa 40 mm bis 70 mm, bevorzugt etwa 50 mm oder 60 mm, betragen. Die Länge des Stützkörpers und/oder dessen hohlzylinderförmigen Wandabschnitts kann zwischen etwa 200 mm bis 300 mm, bevorzugt zwischen etwa 200 mm und 250 mm, beispielsweise etwa 230 mm betragen. Das Verhältnis der Wanddicke des Stützkörpers, insbesondere des Wandabschnitts des Stützkörpers, zu dem Verhältnis von Durchmesser, wie Außendurchmesser, des Stützkörpers, insbesondere des Wandabschnitts des Stützkörpers, im Quadrat zur Länge, insbesondere in Richtung der Mittellängsachse, des Stützkörpers, insbesondere des Wandabschnitts des Stützkörpers, kann etwa 0,1 bis 0,6, insbesondere etwa 0,2 bis 0,3, bevorzugt etwa 0,25, betragen.

Der Stützkörper kann ferner einen Halteabschnitt aufweisen. Der Halteabschnitt kann zum Befestigen der Filtereinheit an einem Filterträger ausgebildet sein. Der Halteabschnitt kann an der stromabwärtigen Seite des Stützkörpers ausgebildet sein. Der Halteabschnitt kann ein Gewinde, wie Außengewinde, oder zumindest ein Rastelement, wie Rastnase, aufweisen. Die Filtereinheit kann ein Deckelelement aufweisen. Die Filtereinheit kann zumindest ein Filterelement aufweisen. Das Deckelelement kann ausgebildet sein, das zumindest eine Filterelement an dem Stützkörper zu halten und/oder zu fixieren. Das Deckelelement kann mit dem Stützkörper, beispielsweise mit dem Bodenabschnitt und/oder Verdrängerelement fest verbunden, beispielsweise wieder lösbar verbunden, insbesondere verschraubt, sein. Das Deckelelement kann ausgebildet sein, den Wandabschnitt bzw. dessen Mantelfläche zu umgreifen. Das Deckelelement kann einen Durchmesser, wie Innendurchmesser, aufweisen, der größer ist als der Durchmesser, insbesondere Außendurchmesser, des Stützkörpers bzw. dessen Wandabschnitts. Das zumindest eine Filterelement kann um den Stützkörper, insbesondere um den Wandabschnitt bzw. dessen Mantelfläche, herum angeordnet sein, beispielsweise aufgeschoben oder umwickelt. Das Filterelement kann ein Filtervlies oder Filtergewebe sein. Das Filterelement kann ein Gitter, Sieb oder Mesh sein. Das Filterelement kann mehrere Filtervliese, Filtergewebe, Gitter und/oder Siebe aufweisen, die beispielsweise übereinander bzw. in radialer Richtung hintereinander angeordnet sein können. Die Gitter und/oder Siebe können gleiche oder unterschiedliche Gittergrößen und/oder Gitterweiten und/oder Gitterlöcher aufweisen. Die Gitter und/oder Siebe können aus Metall und/oder Kunststoff hergestellt sein. Die Filtervliese oder Filtergewebe können aus Fasern, wie Kunststofffasern, Glasfasern, Kohlefasern, Naturfasern oder eine Mischung davon, hergestellt sein.

Eine Filteranordnung kann für eine Extruder-Anlage und/oder Siebwechselvorrichtung sein bzw. ausgebildet sein. Die Filteranordnung kann einen Filterträger aufweisen. Der Filterträger kann im Querschnitt kreisförmig sein. Der Filterträger kann im Wesentlichen scheibenförmig sein. Der Filterträger kann eine Träger-Mittellängsachse aufweisen. Die Träger-Mittellängsachse kann in der Förderrichtung verlaufen. Der Filterträger kann mehrere, insbesondere in Richtung der Träger-Mittellängsachse verlaufende, Träger-Durchgangsöffnungen aufweisen. Eine erste Träger-Durchgangsöffnung kann konzentrisch zu der Träger-Mittellängsachse angeordnet sein. Eine Gruppe von, beispielsweise sechs, zweiten Träger-Durchgangsöffnungen kann entlang eines ersten Kreises angeordnet sein. Der erste Kreis kann konzentrisch zur Träger-Mittellängsachse angeordnet sein. Die zweiten Träger-Durchgangsöffnungen können gleichmäßig entlang des ersten Kreises verteilt angeordnet sein. Eine weitere Gruppe von, beispielsweise zwölf, dritten Träger-Durchgangsöffnungen kann entlang eines zweiten Kreises angeordnet sein. Der zweite Kreis kann konzentrisch zur Träger-Mittellängsachse angeordnet sein. Der zweite Kreis kann den ersten Kreis umgeben. Die dritten Träger-Durchgangsöffnungen können gleichmäßig entlang des zweiten Kreises verteilt angeordnet sein.

Die Filteranordnung kann zumindest eine, insbesondere mehrere Filtereinheiten aufweisen. Im Bereich der Träger-Durchgangsöffnungen können jeweils eine Filtereinheit lösbar an dem Filterträger befestigt und/oder befestigbar sein. Die Träger-Durchgangsöffnungen können jeweils ein Halteabschnitt aufweisen, der komplementär zu dem Halteabschnitt der Filtereinheiten ausgebildet ist. Die Halteabschnitte der Träger-Durchgangsöffnungen können jeweils ein Gewinde, wie Innengewinde, aufweisen, das komplementär zu dem Gewinde, wie Außengewinde der Filtereinheiten ausgebildet ist. Die Halteabschnitte der Träger-Durchgangsöffnungen können jeweils eine zum Rastelement, wie Rastnase, der Filtereinheit komplementäre Struktur zum Befestigen der Filtereinheit aufweisen. Die Filtereinheiten können dem Filterträger in der Förderrichtung vorgeordnet sein. Die Filtereinheiten können alle identisch ausgebildet sein. Die Filtereinheiten können wie vorstehend und/oder nachfolgend beschrieben ausgebildet sein oder werden.

Eine Siebwechselvorrichtung kann für eine Extruder-Anlage sein bzw. ausgebildet sein. Die Siebwechselvorrichtung kann ein Gehäuse und zumindest einen in dem Gehäuse verlaufenden Schmelzekanal aufweisen. Beispielsweise kann die Siebwechselvorrichtung zwei in dem Gehäuse verlaufende Schmelzekanäle aufweisen, die am stromaufwärtigen Schmelzeingang und am stromabwärtigen Schmelzausgang jeweils in einen gemeinsamen Kanal münden bzw. übergehen. Der zumindest eine Schmelzekanal ist zum Führen der in einem Extruder erzeugten Kunststoffschmelze ausgebildet.

Die Siebwechselvorrichtung kann zumindest eine quer zu dem zumindest einen Schmelzekanal und durch diesen in dem Gehäuse verlaufende Führungsbohrung aufweisen. Die zumindest eine Führungsbohrung kann quer, beispielsweise im Wesentlichen senkrecht, zu der Förderrichtung verlaufen und/oder den zumindest einen Schmelzekanal durchqueren. Die Siebwechselvorrichtung kann zumindest ein in der zumindest einen Führungsbohrung angeordnetes Schiebelement aufweisen. Das zumindest eine Schiebeelement kann plattenförmig oder zylinderförmig ausgebildet sein. Die Siebwechselvorrichtung kann zumindest einen Betätigungsantrieb aufweisen. Das zumindest eine Schiebelement kann mittels des zumindest einen Betätigungsantriebs quer, beispielsweise im Wesentlichen senkrecht, zur Förderrichtung und/oder quer, beispielsweise im Wesentlichen senkrecht, zum zumindest einen Schmelzekanal verlagerbar sein. Das zumindest einen Betätigungsantrieb kann beispielsweise hydraulisch und/oder elektromechanisch ausgebildet sein.

Die Siebwechselvorrichtung kann zumindest zwei beabstandet an dem zumindest einen Schiebeelement, beispielsweise austauschbar, angeordnete und/oder gelagerte Filteranordnungen aufweisen. Die Filteranordnungen können wie vorstehend und/oder nachfolgend beschrieben ausgebildet sein. In dem zumindest einen Schiebeelement können zwei durchgehende Aufnahmeöffnungen ausgebildet sein. In den beiden Aufnahmeöffnungen kann jeweils eine Filteranordnung gelagert und/oder austauschbar befestigt sein. Die beiden Aufnahmeöffnungen können quer, beispielsweise im Wesentlichen senkrecht, zur Förderrichtung und/oder quer, beispielsweise im Wesentlichen senkrecht, zum zumindest einen Schmelzkanal derart beabstandet sein, dass sich jeweils eine der Filteranordnungen außerhalb des Gehäuses befindet, wenn sich die jeweils andere Filteranordnung in dem Schmelzekanal befindet.

Eine Extruder-Anlage kann eine Siebwechselvorrichtung aufweisen. Die Siebwechselvorrichtung kann wie vorstehend und/oder nachfolgend beschrieben ausgebildet sein. Die Extruder-Anlage kann einen Extruder, beispielsweise Zweiwellen-Extruder, aufweisen. Die Siebwechselvorrichtung kann dem Extruder in der Förderrichtung nachgeordnet sein. Die Extruder-Anlage kann eine Granuliervorrichtung aufweisen. Die Granuliervorrichtung kann zur Granulierung von Kunststoff-Materialsträngen ausgebildet und/oder bestimmt sein. Die Siebwechselvorrichtung kann der Granuliervorrichtung in der Förderrichtung vorgeordnet sein.

Ein Verfahren kann zum Herstellen einer Filtereinheit sein und/oder dienen. Das Verfahren kann zum Herstellen der vorstehend und/oder nachfolgend beschriebenen Filtereinheit sein und/oder dienen.

Das Verfahren kann den Schritt umfassen: Herstellen eines Sacklochs in einem, insbesondere zylinderförmigen, Stahlrohling, beispielsweise im Wesentlichen nicht schweißbaren Stahlrohling. Das Herstellen des Sacklochs kann durch Bohren und/oder Fräsen und/oder Erodieren und/oder Drehen und/oder ein anderes Fertigungsverfahren erfolgen. Unter dem Herstellen des Sacklochs kann auch ein Fertigen des Sacklochs verstanden werden. Das Herstellen, beispielsweise das Bohren und/oder Fräsen, des Sacklochs kann entlang der Mittellängsachse erfolgen. Das Bohren und/oder Fräsen des Sacklochs kann ein Vorbohren und/oder Vorfräsen sein. Das Erodieren bzw. Drehen kann ein Vorerodieren bzw. Vordrehen sein.

Das Verfahren kann den Schritt umfassen: Herstellen eines Verdrängerelements innerhalb des Sacklochs, insbesondere am bzw. in den Sacklochboden bzw. Sacklochgrund. Das Herstellen des Verdrängerelements kann durch Bohren und/oder Fräsen und/oder Erodieren und/oder Drehen und/oder ein anderes Fertigungsverfahren erfolgen. Unter dem Herstellen des Verdrängerelements kann auch ein Fertigen des Verdrängerelements verstanden werden. Das Herstellen des Sacklochs und des Verdrängerelements kann in einem Schritt oder in aufeinander folgenden Schritten erfolgen. Das Bohren und/oder Fräsen kann in einem Zug erfolgen.

Das Verfahren kann den Schritt umfassen: Vergrößern, insbesondere spanend Vergrößern, des Sacklochs. Das Vergrößern des Sacklochs kann durch Reiben, wie Ausreiben, und/oder Bohren und/oder Drehen erfolgen. Das Reiben kann beispielsweise mittels einer Reibahle erfolgen. Das Bohren und/oder Drehen kann beispielsweise mit einer Bohrstange erfolgen. Das Drehen kann beispielsweise mit einem Drehwerkzeug erfolgen. Das Vergrößern, insbesondere das Reiben und/oder Bohren und/oder Drehen, kann schwingungsgedämpft erfolgen. Die Reibahle und/oder die Bohrstange und/oder das Drehwerkzeug kann schwingungsgedämpft sein. Das Vergrößern des Sacklochs kann ein Anpassen und/oder Verbessern, beispielsweise der Rauigkeit und/oder Güte, der Oberfläche umfassen und/oder sein. Das Vergrößern des Sacklochs kann vor und/oder nach dem Herstellen des Verdrängerelements erfolgen. Das Reiben und/oder Bohren und/oder Drehen kann in einem Zug erfolgen. Vor dem Vergrößern kann das Sackloch ausgespült werden.

Das Herstellen, beispielsweise das Bohren und/oder Fräsen, des Verdrängerelements kann mittels einer Bohrstange erfolgen. Die Bohrstange kann einen Kegelbohrer aufweisen oder derart ausgebildet sein. Die Bohrstange kann zumindest eine Schneidplatte, wie Wendeschneidplatte, aufweisen. Die Bohrstange kann 1 bis 10, beispielsweise 2 bis 7, insbesondere 3 bis 5 Schneidplatten aufweisen. Die Anzahl der Schneidplatten kann gerade oder ungerade sein. Die zumindest eine Schneidplatte bzw. Wendeschneidplatte kann eine im Wesentlichen eckige und/oder runde Form, beispielsweise eine im Wesentlichen quadratische, rechteckige und/oder dreieckige Form aufweisen. Die Bohrstange bzw. der Kegelbohrer kann an einem Ende eine von der Fläche und/oder Kontur des Verdrängerelements abhängige Geometrie aufweisen, beispielsweise eine zum Verdrängerelement im Wesentlichen komplementär ausgebildete Geometrie. Die zumindest eine Schneidplatte kann eine von der Fläche und/oder Kontur des Verdrängerelements abhängige Geometrie aufweisen. Die Bohrstange kann eine Anzahl von Schneidplatten, wie Wendeschneidplatten, aufweisen. Die Anzahl von Schneidplatten kann abhängig von der Fläche und/oder Kontur des Verdrängerelements sein. Die Anzahl von Schneidplatten kann der Anzahl oder der doppelten Anzahl von Flächenabschnitten bzw. Konturabschnitten des Verdrängerelements entsprechen. Die Anzahl von Schneidplatten kann 1 bis 10, beispielsweise 2 bis 7, insbesondere 3 bis 5 Schneidplatten aufweisen und/oder sein. Die Schneidplatten können den Winkel der Flächenabschnitte bzw. Konturabschnitte aufweisen und/oder definieren.

Mit der Erfindung kann der Druckverlust signifikant reduziert werden. Der Durchsatz kann erhöht werden. Die Stabilität und/oder Festigkeit des Stützkörpers, insbesondere während des Betriebes, kann verbessert werden. Der Stützkörper bzw. dessen Wandabschnitt kann im Vergleich zu bekannten Stützkörpern eine dünnere Wandstärke aufweisen. Ablagerungen an der Innenseite können vermieden und die Reinigung vereinfacht werden. Die Prozesssicherheit des Herstellungsverfahrens kann verbessert werden. Die Spanevakuierung und/oder die Bearbeitungszeit kann verbessert werden.

Nachfolgend werden Ausführungsbeispiele der Erfindung unter Bezugnahme auf Figuren näher beschrieben, dabei zeigen schematisch und beispielhaft:
- Fig. 1: eine Seitenansicht einer Filtereinheit;
- Fig. 2: eine Schnittansicht entlang A-A der Filtereinheit gemäß Fig. 1;
- Fig. 3: eine Schnittansicht entlang B-B der Filtereinheit gemäß Fig. 1;
- Fig. 4: eine Vorderansicht der Filtereinheit gemäß Fig. 1;
- Fig. 5: eine Teilschnittansicht entlang E-E der Filtereinheit gemäß Fign. 1 und 4;
- Fig. 6: eine Detailansicht X der Filtereinheit gemäß Fign. 1 und 5;
- Fig. 7: eine perspektivische Ansicht einer Filteranordnung;
- Fig. 8: eine Seitenansicht der Filteranordnung gemäß Fig. 7;
- Fig. 9: eine Vorderansicht der Filteranordnung gemäß Fig. 7;
- Fig. 10: eine Schnittansicht entlang A-A der Filteranordnung gemäß Fign. 7 und 9;
- Fig. 11: eine perspektivische Ansicht einer Siebwechselvorrichtung;
- Fig. 12: eine Draufsicht der Siebwechselvorrichtung gemäß Fig. 11;
- Fig. 13: eine Hinteransicht der Siebwechselvorrichtung gemäß Fig. 11;
- Fig. 14: eine Schnittansicht entlang A-A der Siebwechselvorrichtung gemäß Fign. 11 und 13; und
- Fig. 15: ein Ablaufschema für ein Verfahren zum Herstellen einer Filtereinheit.

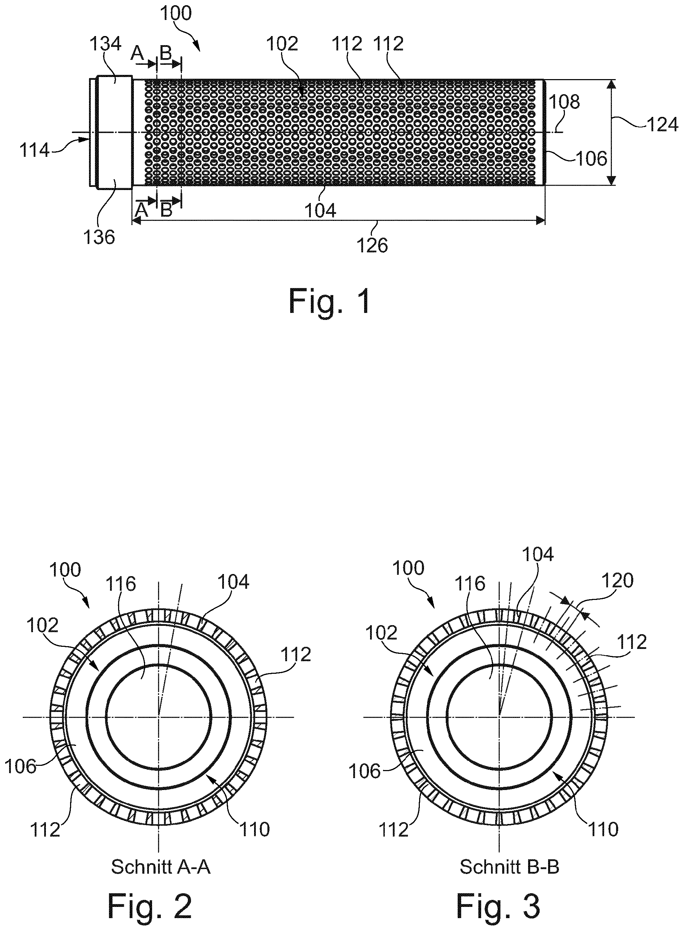

Fign. 1 bis 6 zeigen verschiedene Ansichten einer Filtereinheit 100, die zum Filtern einer Kunststoffschmelze ausgebildet ist. Die Filtereinheit 100 weist einen Stützkörper 102 mit einem hohlzylinderförmigen Wandabschnitt 104 und einem damit verbundenen Bodenabschnitt 106 auf. Der Stützkörper 102 weist eine Mittellängsachse 108 auf und begrenzt einen Innenraum 110. Der hohlzylinderförmige Wandabschnitt 104 weist mehrere in den Innenraum 110 mündende Durchgangsöffnungen 112 auf und bildet gegenüberliegend zu dem Bodenabschnitt 106 eine Austrittsöffnung 114 für die Kunststoffschmelze aus. Die in den Innenraum 110 mündenden Durchgangsöffnungen 112 des Wandabschnitts 104 weisen alle den gleichen Bohrungsdurchmesser 120 auf. Die Durchgangsöffnungen 112 sind im vorliegenden Ausführungsbeispiel als Durchgangsbohrungen 112 ausgebildet.

Der Bodenabschnitt 106 ist an der stromaufwärtigen Seite (in Fig. 1 rechts) des Stützkörpers 102 angeordnet und die Austrittsöffnung 114 ist an der stromabwärtigen Seite (in Fig. 1 links) des Stützkörpers 102 angeordnet. Ein Filterelement, wie ein Filtervlies, (in Fig. 1 bis 6 nicht dargestellt) ist um den Wandabschnitt 104 herum angeordnet, beispielsweise aufgeschoben. Die Kunststoffschmelze wird durch das Filterelement gedrückt und gelangt dann durch die Durchgangsöffnungen 112 in den Innenraum 110, in welchem die Kunststoffschmelze dann bis zur Austrittsöffnung strömt und dort wieder austritt.

Das Verhältnis der aktiven Filterfläche zu der äußeren Mantelfläche des Wandabschnitts 104 des Stützkörpers 102 beträgt etwa 0,15 bis 0,65, insbesondere etwa 0,25 bis 0,5, bevorzugt etwa 0,38. Die aktive Filterfläche ist die Gesamtfläche aller Durchgangsbohrungen 112 bzw. aller Querschnittsflächen 118 der Durchgangsbohrungen 112. Die aktive Filterfläche kann somit durch die Multiplikation der Anzahl von Durchgangsbohrungen 112 mit der Querschnittsfläche 118 einer Durchgangsbohrung 122 berechnet werden bzw. definiert sein, da alle Durchgangsbohrungen 112 den gleichen Bohrungsdurchmesser 120 aufweisen.

Das Verhältnis der Wanddicke 122 des Wandabschnitts 104 des Stützkörpers 102, zu einem Verhältnis von Durchmesser 124, wie Außendurchmesser 124, des Wandabschnitts 104 des Stützkörpers 102, im Quadrat zur Länge 126 des Wandabschnitts 104 des Stützkörpers 102 in Richtung der Mittellängsachse 108 beträgt etwa 0,1 bis 0,6, insbesondere etwa 0,2 bis 0,3, bevorzugt etwa 0,25.

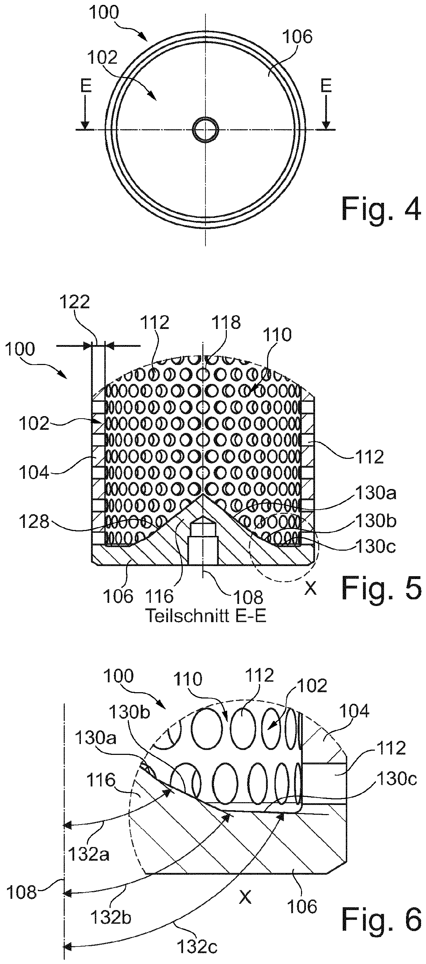

Die Filtereinheit 100 weist ferner ein Verdrängerelement 116 zum Verdrängen der über die Durchgangsöffnungen 112 in den Innenraum 110 eingetretenen Kunststoffschmelze im Wesentlichen in Richtung der Mittellängsachse 108 auf. Wie in Fign. 5 und 6 zu erkennen, sind das Verdrängerelement 116 und der Stützkörper 102 einteilig ausgebildet und aus einem Stück bzw. Teil hergestellt. Zum Herstellen des einstückigen Stützkörpers 102 mit Verdrängerelement 116 kommt ein im Wesentlichen nicht schweißbarer Stahl, insbesondere legierter, wie hochlegierter, Warmarbeitsstahl, zum Einsatz.

Das Verdrängerelement 116 ist im Innenraum 110 und am Bodenabschnitt angeordnet bzw. ausgebildet. Wie in Fig. 5 dargestellt, ist das Verdrängerelement 116 zumindest abschnittsweise im Wesentlichen kegelförmig ausgebildet, wobei die Grundfläche des Verdrängerelements 116 durch den Bodenabschnitt 106 gebildet ist. Um eine gleichmäßige Strömung der Kunststoffschmelze zu ermöglichen, ist das Verdrängerelement 116, wie in Fign. 2, 3 und 5 dargestellt, konzentrisch zur Mittellängsachse 108 angeordnet bzw. ausgebildet.

Das Verdrängerelement 116 weist ferner eine Mantelfläche 128 bzw. Mantelkontur 128 mit mehreren Mantelflächenabschnitten 130a, 130b, 130c bzw. Mantelkonturabschnitten 130a, 130b, 130c auf. Die Mantelflächenabschnitten 130a, 130b, 130c bzw. Mantelkonturabschnitten 130a, 130b, 130c verjüngen sich im Wesentlichen konisch in Richtung zur Mittellängsachse 108 hin und verlaufen in unterschiedlichen Winkel 132a, 132b, 132c schräg und relativ zur Mittellängsachse 108, wobei der Winkel eines radial außenliegenden Mantelflächenabschnitten 130a, 130b, 130c bzw. Mantelkonturabschnitten 130a, 130b, 130c größer ist als der Winkel eines radial innenliegenden Mantelflächenabschnitten 130a, 130b, 130c bzw. Mantelkonturabschnitten 130a, 130b, 130c. Im vorliegenden Ausführungsbeispiel gemäß Fign. 5 und 6 weist der radial außenliegende Mantelflächenabschnitt 130c bzw. Mantelkonturabschnitt 130c einen größeren Winkel 132c relativ zur Mittellängsachse 108 auf als die beiden radial weiter innenliegenden Mantelflächenabschnitte 130a, 130b bzw. Mantelkonturabschnitte 130a, 130b. Der der radial innenliegende Mantelflächenabschnitt 130a bzw. Mantelkonturabschnitt 130a weist einen kleineren Winkel 132a relativ zur Mittellängsachse 108 auf als die beiden radial weiter außenliegenden Mantelflächenabschnitte 130b, 130c bzw. Mantelkonturabschnitte 130b, 130c. Dadurch ist die Mantelfläche bzw. Kontur des Verdrängerelements 116 spezifisch angepasst, um eine optimale Strömung und Weiterleitung der gefilterten Kunststoffschmelze in Richtung der Mittellängsachse 108 zur Austrittsöffnung 114 hin zu ermöglichen. Das Fließverhalten der Kunststoffschmelze und die rheologischen Verhältnisse können durch Wahl geeigneter Winkel 132a, 132b, 132c optimal eingestellt werden., insbesondere um an der Einströmseite Produktablagerungen zu verhindern. Auch kann durch geeignete Wahl der Winkel 132a, 132b, 132c die Spanabführbarkeit während dem Herstellungsprozess verbessert werden.

Der Stützkörper 102 weist ferner an seiner stromabwärtigen Seite einen Halteabschnitt 134 auf, der zum Befestigen der Filtereinheit 100 an einem Filterträger ausgebildet ist. Der Halteabschnitt 134 kann beispielsweise ein zu einem Gewinde des Filterträgers komplementäres Außengewinde (in Fig. 1 bis 6 nicht dargestellt) aufweisen, so dass der Stützkörper 102 mit dem Filterträger verschraubt werden kann.

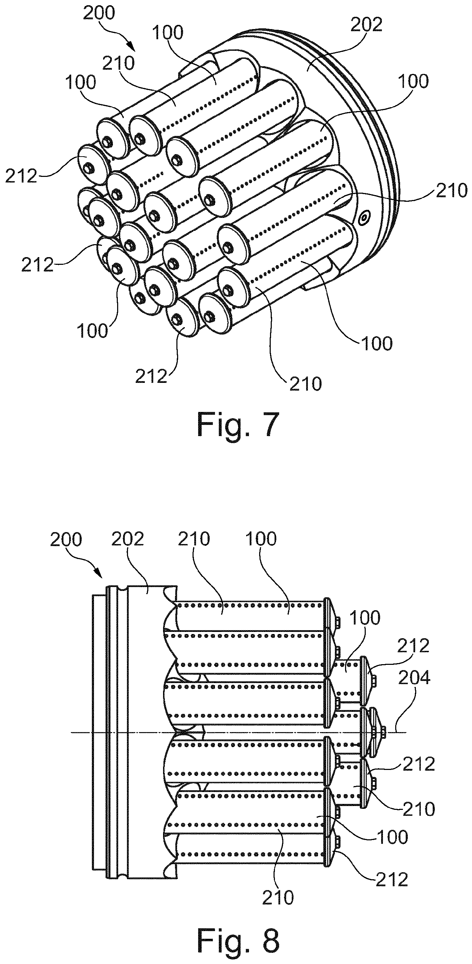

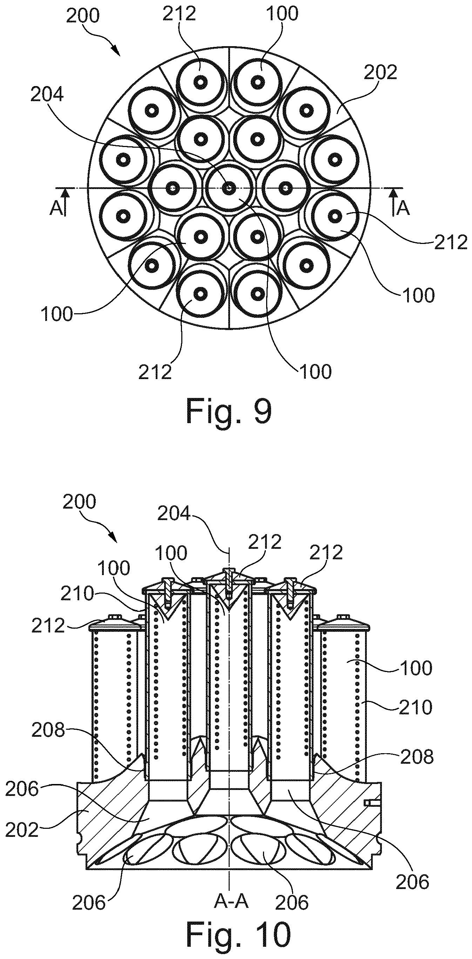

Fign. 7 bis 10 zeigen verschiedene Ansichten einer Filteranordnung 200, die zum Filtern der Kunststoffschmelze ausgebildet ist und in einer Siebwechselvorrichtung zum Einsatz kommt. Die Filteranordnung 200 weist einen Filterträger 202 mit einer Träger-Mittellängsachse 204 und, wie in Fig. 10 dargestellt, mehrere in Richtung der Träger-Mittellängsachse 204 verlaufende Träger-Durchgangsöffnungen 206 auf. Im Bereich der Träger-Durchgangsöffnungen 206 ist jeweils eine Filtereinheit 100 lösbar an dem Filterträger 202 befestigt, insbesondere mittels des Haltabschnitts 134 der Filtereinheit 100 in ein Innengewinde 208 eingeschraubt. Die Filtereinheiten 100 sind wie vorstehend und/oder nachfolgend beschrieben ausgebildet. Auf den Stützköpern 102 der Filtereinheiten 100 ist jeweils ein Filterelement 210, beispielsweise Filtervlies 210, aufgeschoben und mittels eines Deckelelements 212 an dem jeweiligen Wandabschnitt 104 des Stützkörpers 102 fixiert. Das Deckelelement 212 kann mit dem Stützkörper 102, beispielsweise mit dessen Bodenabschnitt 106 und/oder Verdrängerelement 116, verschraubt sein.

Wie in Fig. 9 dargestellt ist der Filterträger 202 im Querschnitt kreisförmig. Die Träger-Mittellängsachse 204 verläuft in der Förderrichtung und parallel zu den Mittellängsachsen 108 der Filtereinheiten 100, wie in Fign. 8 und 10 dargestellt. Eine erste Träger-Durchgangsöffnung 206 ist konzentrisch zu der Träger-Mittellängsachse 204 angeordnet. Eine Gruppe von, hier sechs, zweiten Träger-Durchgangsöffnungen 206 ist entlang eines zur Träger-Mittellängsachse 204 konzentrischen ersten Kreises angeordnet, wobei die zweiten Träger-Durchgangsöffnungen 206 gleichmäßig entlang des ersten Kreises verteilt angeordnet sind. Eine weitere Gruppe von, hier zwölf, dritten Träger-Durchgangsöffnungen 206 ist entlang eines zur Träger-Mittellängsachse 204 konzentrischen zweiten Kreises angeordnet, wobei der zweite Kreis den ersten Kreis umgibt. Die dritten Träger-Durchgangsöffnungen 206 sind ebenfalls gleichmäßig entlang des zweiten Kreises verteilt angeordnet.

Im Übrigen wird ergänzend insbesondere auf Fign. 1 bis 6 und die zugehörige Beschreibung verwiesen.

Fign. 7 bis 10 zeigen verschiedene Ansichten einer Siebwechselvorrichtung 300 für eine Extruder-Anlage. Die Siebwechselvorrichtung 300 weist ein Gehäuse 302 und zwei in dem Gehäuse 302 verlaufende Schmelzekanäle 304 auf, die am stromaufwärtigen Schmelzeingang und am stromabwärtigen Schmelzausgang jeweils in einen gemeinsamen Eingangskanal 306 bzw. Ausgangskanal 308 münden bzw. übergehen. Die Siebwechselvorrichtung 300 weist ferner zwei Führungsbohrung 310 auf, wobei jeweils eine Führungsbohrung 310 quer, beispielsweise im Wesentlichen senkrecht, zu dem jeweiligen Schmelzekanal 304 und durch diesen in dem Gehäuse 302 verläuft. Die Führungsbohrungen 310 verlaufen ferner quer, beispielsweise im Wesentlichen senkrecht, zu der Förderrichtung.

Die Siebwechselvorrichtung 300 weist zwei zylinderförmige Schiebelemente 312 auf, wobei jeweils ein Schiebeelement 312 in einer Führungsbohrung 310 verschiebbar gelagert ist. Ferner umfasst die Siebwechselvorrichtung 300 einen Betätigungsantrieb 314, der ausgebildet ist, die Schiebelemente 312 unabhängig voneinander quer, beispielsweise im Wesentlichen senkrecht, zur Förderrichtung und quer, beispielsweise im Wesentlichen senkrecht, zum jeweiligen Schmelzekanal 304 zu verlagern. Das zumindest einen Betätigungsantrieb 314 kann beispielsweise hydraulisch und/oder elektromechanisch ausgebildet sein.

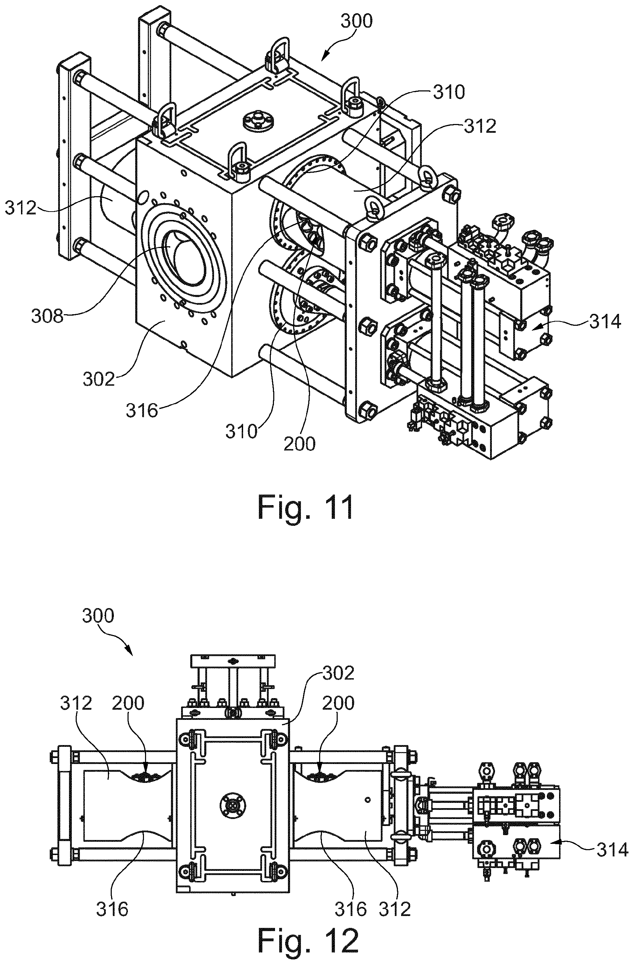

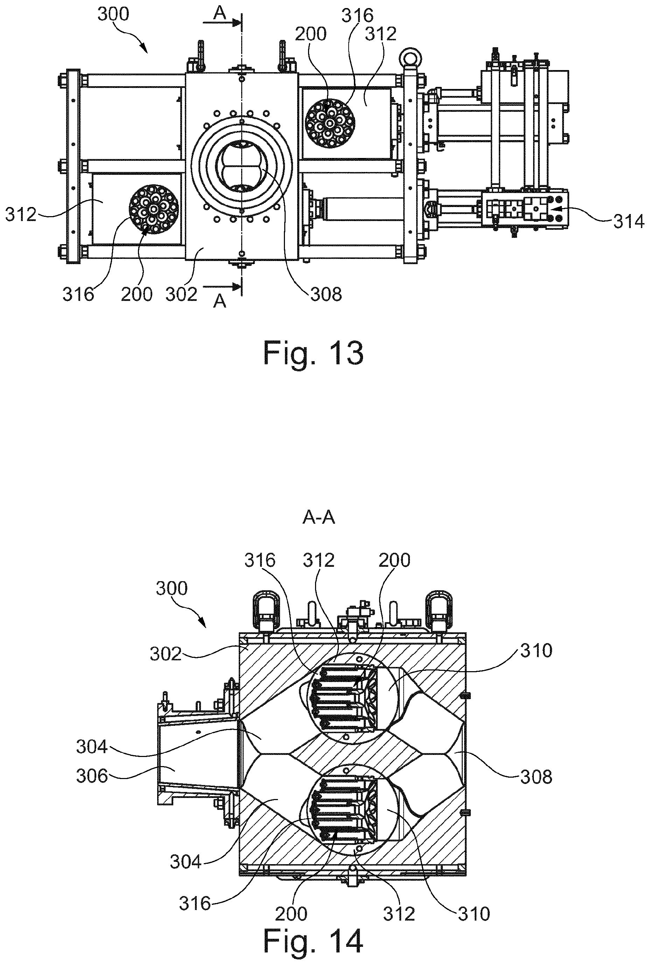

Im vorliegenden Ausführungsbeispiel gemäß Fign. 11 bis 14 umfasst die Siebwechselvorrichtung 300 vier Filteranordnungen 200. Die Filteranordnungen 200 sind wie vorstehend und/oder nachfolgend beschrieben ausgebildet. Jeweils zwei Filteranordnungen 200 sind voneinander beabstandet an einem Schiebeelement 312 angeordnet. Hierfür sind in den Schiebeelementen 312 jeweils zwei durchgehende Aufnahmeöffnungen 316 ausgebildet, in denen jeweils eine Filteranordnung 200 gelagert und/oder austauschbar befestigt ist. Die beiden Aufnahmeöffnungen sind quer, beispielsweise im Wesentlichen senkrecht, zur Förderrichtung und quer, beispielsweise im Wesentlichen senkrecht, zum jeweiligen Schmelzkanal 304 derart beabstandet, dass sich jeweils eine der Filteranordnungen 200 außerhalb des Gehäuses 302 befindet, wenn sich die jeweils andere Filteranordnung 200 in dem Schmelzekanal 304 befindet.

Im Übrigen wird ergänzend insbesondere auf Fign. 1 bis 10 und die zugehörige Beschreibung verwiesen.

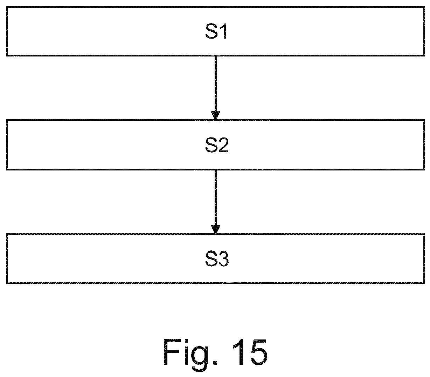

Fig. 15 zeigt schematisch ein Ablaufschema für ein Verfahren zum Herstellen einer Filtereinheit 100.

In einem Schritt S1 wird ein Sackloch in einen, insbesondere zylinderförmigen, Stahlrohling, beispielsweise im Wesentlichen nicht schweißbaren Stahlrohling, gebohrt und/oder gefräst. Das Bohren und/oder Fräsen des Sacklochs erfolgt entlang der Mittellängsachse 108.

In einem Schritt S2 wird das Sackloch, beispielsweise mittels einer Reibahle, gerieben, wie ausgerieben. Vor dem Reiben kann das Sackloch ausgespült werden.

In einem Schritt S3 wird ein Verdrängerelement 116 innerhalb des Sacklochs, insbesondere in den Sacklochboden bzw. Sacklochgrund gebohrt und/oder gefräst. Das Bohren und/oder Fräsen des Verdrängerelements 116 kann mittels einer Bohrstange erfolgen. Die Bohrstange kann einen Kegelbohrer aufweisen oder derart ausgebildet sein. Die Bohrstange kann zumindest eine Schneidplatte, wie Wendeschneidplatte, aufweisen. Die zumindest eine Schneidplatte kann eine von der Fläche und/oder Kontur des Verdrängerelements 116 abhängige Geometrie aufweisen. Die Bohrstange kann eine Anzahl von Schneidplatten, wie Wendeschneidplatten, aufweisen. Die Anzahl von Schneidplatten kann abhängig von der Fläche und/oder Kontur des Verdrängerelements 116 sein. Die Anzahl von Schneidplatten kann der Anzahl oder der doppelten Anzahl von Flächenabschnitten bzw. Konturabschnitten des Verdrängerelements 116 entsprechen. Beispielsweise kann die Bohrstange 1 bis 10, insbesondere 2 bis 7, vorzugsweise 3 bis 5 Schneidplatten aufweisen. Die Anzahl der Schneidplatten kann gerade oder ungerade sein. Die Schneidplatten können den Winkel 132a, 132b, 132c der Flächenabschnitte bzw. Konturabschnitte aufweisen und/oder definieren.

Im Übrigen wird ergänzend insbesondere auf Fign. 1 bis 14 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Filtereinheit
- 102: Stützkörper
- 104: Wandabschnitt
- 106: Bodenabschnitt
- 108: Mittellängsachse
- 110: Innenraum
- 112: Durchgangsöffnungen
- 114: Austrittsöffnung
- 116: Verdrängerelement
- 118: Querschnittsflächen
- 120: Bohrungsdurchmesser
- 122: Wanddicke
- 124: Außendurchmesser
- 126: Länge
- 128: Mantelfläche / Mantelkontur
- 130a: Mantelflächenabschnitten / Mantelkonturabschnitten
- 130b: Mantelflächenabschnitten / Mantelkonturabschnitten
- 130c: Mantelflächenabschnitten / Mantelkonturabschnitten
- 132a: Winkel
- 132b: Winkel
- 132c: Winkel
- 134: Halteabschnitt
- 136: Außengewinde

- 200: Filteranordnung
- 202: Filterträger
- 204: Träger-Mittellängsachse
- 206: Träger-Durchgangsöffnungen
- 208: Innengewinde
- 210: Filterelemente
- 212: Deckelelemente
- 300: Siebwechselvorrichtung
- 302: Gehäuse
- 304: Schmelzekanäle
- 306: Eingangskanal
- 308: Ausgangskanal
- 310: Führungsbohrung
- 312: Schiebelemente
- 314: Betätigungsantrieb
- 316: Aufnahmeöffnungen

- S1: Bohren und/oder Fräsen des Sacklochs
- S2: Reiben des Sacklochs
- S3: Bohren und/oder Fräsen des Verdrängerelements

## Patentansprüche

1. Filtereinheit (100) für eine Extruder-Anlage, umfassend
einen Stützkörper (102) mit einem hohlzylinderförmigen Wandabschnitt (104) und einem damit verbundenen Bodenabschnitt (106), wobei der Stützkörper (102) eine Mittellängsachse (108) aufweist und einen Innenraum (110) begrenzt, wobei der hohlzylinderförmige Wandabschnitt (104) mehrere in den Innenraum (110) mündende Durchgangsöffnungen (112) aufweist und gegenüberliegend zu dem Bodenabschnitt (106) eine Austrittsöffnung (114) für eine Kunststoffschmelze ausbildet; und
ein Verdrängerelement (116) zum Verdrängen der, insbesondere über die Durchgangsöffnungen (112), in den Innenraum (110) eingetretenen Kunststoffschmelze im Wesentlichen in Richtung der Mittellängsachse (108), wobei das Verdrängerelement (116) und der Stützkörper (102) einteilig ausgebildet und/oder hergestellt sind.

2. Filtereinheit (100) nach Anspruch 1, **dadurch gekennzeichnet, dass** das Verdrängerelement (116) im Innenraum (110) und/oder am Bodenabschnitt (106) angeordnet bzw. ausgebildet ist.

3. Filtereinheit (100) nach wenigstens einem der vorhergehenden Ansprüche, **dadurch gekennzeichnet, dass** das Verdrängerelement (116) zumindest abschnittsweise im Wesentlichen kegelförmig und/oder konusförmig und/oder teilkonusförmig und/oder kugelförmig und/oder teilkugelförmig ausgebildet ist, und/oder wobei die Grundfläche des Verdrängerelements (116) durch den Bodenabschnitt (106) gebildet und/oder definiert ist.

4. Filtereinheit (100) nach wenigstens einem der vorhergehenden Ansprüche, **dadurch gekennzeichnet, dass** das Verdrängerelement (116) konzentrisch zur Mittellängsachse (108) angeordnet bzw. ausgebildet ist.

5. Filtereinheit (100) nach wenigstens einem der vorhergehenden Ansprüche, **dadurch gekennzeichnet, dass** das Verdrängerelement (116) eine Fläche (128) und/oder Kontur (128), wie Mantelfläche und/oder Mantelkontur, mit einem oder mehreren Flächenabschnitten (130a, 130b, 130c) und/oder Konturabschnitten (130a, 130b, 130c), wie Mantelflächenabschnitten und/oder Mantelkonturabschnitten, aufweist, wobei sich der eine oder die mehreren Flächenabschnitte (130a, 130b, 130c) bzw. Konturabschnitte (130a, 130b, 130c) in Richtung zur Mittellängsachse (108) hin, insbesondere konisch, verjüngen und/oder, insbesondere unter einem Winkel (132a, 132b, 132c), schräg und/oder relativ zur Mittellängsachse (108) verlaufen.

6. Filtereinheit (100) nach Anspruch 5, **dadurch gekennzeichnet, dass** die mehreren Flächenabschnitte (130a, 130b, 130c) bzw. Konturabschnitte (130a, 130b, 130c) in unterschiedlichen Winkeln (132a, 132b, 132c) schräg und/oder relativ zur Mittellängsachse (108) verlaufen, wobei der Winkel (132a, 132b, 132c) eines radial außenliegenden Flächenabschnitts (130a, 130b, 130c) bzw. Konturabschnitts (130a, 130b, 130c) größer ist als der Winkel (132a, 132b, 132c) eines radial innenliegenden Flächenabschnitts (130a, 130b, 130c) bzw. Konturabschnitts (130a, 130b, 130c).

7. Filtereinheit (100) nach wenigstens einem der vorhergehenden Ansprüche, **dadurch gekennzeichnet, dass** die in den Innenraum (110) mündenden Durchgangsöffnungen (112) des Wandabschnitts (104) alle den gleichen Durchmesser (120) aufweisen.

8. Filtereinheit (100) nach wenigstens einem der vorhergehenden Ansprüche, **dadurch gekennzeichnet, dass** der Stützkörper (102) und das Verdrängerelement (116) aus einem im Wesentlichen nicht schweißbaren Stahl, insbesondere legierten, wie hochlegierten, Warmarbeitsstahl, hergestellt sind.

9. Filtereinheit (100) nach wenigstens einem der vorhergehenden Ansprüche, **dadurch gekennzeichnet, dass** das Verhältnis der aktiven Filterfläche zu der Mantelfläche des Stützkörpers (102), insbesondere des Wandabschnitts (104) des Stützkörpers (102), etwa 0,15 bis 0,65, insbesondere etwa 0,25 bis 0,5, bevorzugt etwa 0,38, beträgt.

10. Filtereinheit (100) nach wenigstens einem der vorhergehenden Ansprüche, **dadurch gekennzeichnet, dass** das Verhältnis der Wanddicke (122) des Stützkörpers (102), insbesondere des Wandabschnitts (104) des Stützkörpers (102), zu einem Verhältnis von Durchmesser (124), wie Außendurchmesser (124), des Stützkörpers (102), insbesondere des Wandabschnitts (104) des Stützkörpers (102), im Quadrat zur Länge (126), insbesondere in Richtung der Mittellängsachse (108), des Stützkörpers (102), insbesondere des Wandabschnitts (104) des Stützkörpers (102), etwa 0,1 bis 0,6, insbesondere etwa 0,2 bis 0,3, bevorzugt etwa 0,25, beträgt.

11. Filteranordnung (200) für eine Extruder-Anlage mit einem Filterträger (202), der eine Träger-Mittellängsachse (204) und mehrere in Richtung der Träger-Mittellängsachse (204) verlaufende Träger-Durchgangsöffnungen (206) aufweist, wobei im Bereich der Träger-Durchgangsöffnungen (206) jeweils eine Filtereinheit (100) nach wenigstens einem der vorhergehenden Ansprüche lösbar an dem Filterträger (202) befestigt und/oder befestigbar ist.

12. Siebwechselvorrichtung (300) für eine Extruder-Anlage, umfassend ein Gehäuse (302);
zumindest einen in dem Gehäuse (302) verlaufenden Schmelzekanal (304);
zumindest eine quer zu dem zumindest einen Schmelzekanal (304) und durch diesen in dem Gehäuse (302) verlaufende Führungsbohrung (310);
zumindest ein in der zumindest einen Führungsbohrung (310) angeordnetes Schiebelement (312); und
zumindest zwei beabstandet an dem zumindest einen Schiebeelement (312) angeordnete und/oder gelagerte Filteranordnungen (200) nach Anspruch 11.

13. Verfahren zum Herstellen einer Filtereinheit (100) für eine Extruder-Anlage, insbesondere einer Filtereinheit (100) nach wenigstens einem der vorhergehenden Ansprüche 1 bis 10, umfassend:
Herstellen eines Sacklochs in einem, insbesondere zylinderförmigen, Stahlrohling, insbesondere im Wesentlichen nicht schweißbaren Stahlrohling; und
Herstellen (S3) eines Verdrängerelements (116) innerhalb des Sacklochs, insbesondere am bzw. in den Sacklochboden bzw. Sacklochgrund.

14. Verfahren nach Anspruch 13, **dadurch gekennzeichnet, dass** das Herstellen des Sacklochs und des Verdrängerelements (116) in einem Schritt oder in aufeinander folgenden Schritten erfolgt.

15. Verfahren nach Anspruch 13 oder 14, **gekennzeichnet durch** Vergrößern, insbesondere spanend Vergrößern, wie Reiben (S2), Bohren oder Drehen, des Sacklochs vor und/oder nach dem Herstellen des Verdrängerelements (116).

16. Verfahren nach wenigstens einem der vorhergehenden Ansprüche 13 bis 15, **dadurch gekennzeichnet, dass** das Herstellen (S3) des Verdrängerelements mittels einer Bohrstange erfolgt, die zumindest eine Schneidplatte, wie Wendeschneidplatte, aufweist und/oder wobei die zumindest eine Schneidplatte eine von der Fläche und/oder Kontur des Verdrängerelements (116) abhängige Geometrie aufweist.

17. Verfahren nach Anspruch 16, **dadurch gekennzeichnet, dass** die Bohrstange eine Anzahl von Schneidplatten, wie Wendeschneidplatten, aufweist, die abhängig von der Fläche und/oder Kontur des Verdrängerelements )116) ist und/oder die der Anzahl oder der doppelten Anzahl von Flächenabschnitten bzw. Konturabschnitten des Verdrängerelements (116) entspricht, und/oder dass die Bohrstange 1 bis 10, insbesondere 2 bis 7, vorzugsweise 3 bis 5 Schneidplatten aufweist.
